# EUROPÄISCHE PATENTSCHRIFT

(11) **EP 0 751 703 B1**
(45) Veröffentlichungstag und Bekanntmachung des Hinweises auf die Patenterteilung: **26.01.2000**
(21) Anmeldenummer: 95913116.0
(22) Anmeldetag: 14.03.1995
(51) Int. Cl.: A01C 17/00

(54) **VERFAHREN ZUR ERMITTLUNG VON EINSTELLDATEN FÜR EINEN SCHLEUDERDÜNGERSTREUER**
PROCESS FOR DETERMINING CONTROL DATA FOR A FERTILIZER SPREADER
PROCEDE PERMETTANT DE DETERMINER DES DONNEES DE REGLAGE POUR UN EPANDEUR D'ENGRAIS CENTRIFUGE

(30) Priorität: 15.03.1994 DE 4408621; 13.01.1995 DE 19500824
(43) Veröffentlichungstag der Anmeldung: 08.01.1997
(73) Patentinhaber: Amazonen-Werke H. Dreyer GmbH & Co. KG, 49202 Hasbergen (DE)
(72) Erfinder: SCHEUFLER, Bernd, D-49205 Hasbergen/Gaste (DE)
(74) Vertreter: Grünecker, Kinkeldey, Stockmair & Schwanhäusser Anwaltssozietät
(86) Internationale Anmeldenummer: EP9500955
(87) Internationale Veröffentlichungsnummer: WO9524823

(56) Entgegenhaltungen:
- EP-A- 0 298 549
- EP-A- 0 309 062
- EP-A- 0 311 202
- EP-A- 0 495 237
- WO-A-92/12620
- DE-A- 3 617 377
- NL-A- 8 702 289
- US-A- 4 693 122

## Beschreibung

Die Erfindung betrifft eine Vorrichtung gemäß dem Oberbegriff des Anspruchs 1 und ein Verfahren gemäß dem Oberbegriff des Anspruchs 8.

In der Landwirtschaft werden sehr große Mengen Mineraldünger ausgebracht. Hierfür muß sehr viel Geld ausgegeben werden. Das Ziel ist es deshalb, den kostenintensiven Mineraldünger so zu verteilen, daß der von den Pflanzen optimal genutzt werden kann.

Für die Ausbringung der Mineraldünger sind im Laufe der Zeit die verschiedenartigsten Verteiltechniken entwickelt worden. Hierbei haben sich insbesondere die Zentrifugaldüngerstreuer durchgesetzt. Damit der Mineraldüngerstreuer möglichst zielgenau verteilt werden kann, müssen beispielsweise am Schleuderdüngerstreuer entsprechende Einstellungen vorgenommen werden, die berücksichtigen, mit welcher Arbeitsbreite gestreut und welche Düngersorte ausgebracht werden soll. Die Problematik besteht nun darin, daß die Stoffeigenschaften und die Streueigenschaften der verschiedenen Dünger sehr stark schwanken, so daß die Einstellung für jede auszubringenden Düngersorte korrigiert werden muß. Die Veränderung der Stoffeigenschaften ist für den Landwirt jedoch nicht ohne weiteres erkennbar.

Die Druckschrift NL-A-8702289 beschreibt eine Vorrichtung und ein Verfahren mit den Merkmalen der Oberbegriffe der Ansprüche 1 bzw. 8. Aus EP-A-0311202 ist weiterhin bekannt, im Bereich der Wurfschaufeln Sensorelemente anzuordnen, mittels welcher die von dem Streumaterial ausgehenden Kräfte ermittelbar sind. Aus EP-A-0298549 ist ein Düngerstreuer bekannt, bei dem über den Streubereich verteilt jeweils beabstandet voneinander einzelne Lichtquellen und zugehörige Sensoren angeordnet sind, die das von der zugehörigen Lichtquelle ausgesendete Licht, das einen Bereich geschnitten hat, der vom Streuer abgestreutes Material umfasst, messen.

Der Erfindung liegt die Aufgabe zugrunde, auf einfache Weise zu ermöglichen, daß der Schleuderdüngerstreuer einfach und teilweise auch automatisch entsprechend der jeweiligen Düngersorte eingestellt wird. Diese Aufgabewird gelöst durch eine Vorrichtung nach Anspruch 1 und ein Verfahren nach Anspruch 8.

Dadurch, daß an dem Düngerstreuer Sensoren angeordnet sind, welche den Düngerstrom nach Bewegungsrichtung und Geschwindigkeit der Düngerkörner sowie der Düngermenge jeweils über Sektorbereiche abtasten und erfassen und daß aus den von den Sensoren ermittelten Daten in Verbindung mit einem Rechner die Düngequerverteilung nach Arbeitsbreite und Verteilgenauigkeit errechnet wird. Die Messung der Düngerverteilung durch die Sensoren wird während der Streuarbeit für die tatsächliche Verteilung ermittelt. Es kann also während der Verteilung die Einstellung des Düngerstreuers entsprechend der von den Sensoren ermittelten Daten korrigiert werden, so daß während der Streuarbeit die Düngerverteilung optimiert werden kann.

Hierbei kann vorgesehen sein, daß aufgrund der ermittelten Düngerverteilung und Verteilgenauigkeit nach vorgegebenen Grenzwerten der Düngerstreuer einstellbar ist und/oder direkt mittels geeigneter Einstellvorrichtungen eingestellt wird.

In einer weiteren Ausgestaltung der Erfindung ist vorgesehen, daß mittels einer geeigneten Sensoreinrichtung, beispielsweise Video- oder anderer Kamera, die sich in dem Streufächer oder in den Streufächern befindlichen Düngerkörner abgetastet oder aufgenommen werden. Mittels dieser als Videokamera ausgebildeten Sensoreinrichtung wird die tatsächliche Düngerverteilung ermittelt. Hierbei kann beispielsweise vorgesehen sein, daß mittels der Kamera die Düngerverteilung in einem dreidimensionalen Bild aufgenommen wird, aus dem die Querverteilung des Düngers und/oder die Verteilgenauigkeit mittels eines Rechners ermittelt wird. Hierbei ist es möglich, diese Düngerverteilung auf dem Bildschirm grafisch darzustellen. Es ist mithilfe der elektronischen Datenverarbeitung nach der Erfindung vorgesehen, daß das dreidimensionale Bild der Kamera von dem Streufächer zu einem zweidimensionalen Bild für die Querverteilung zusammengeschoben wird.

In einer weiteren Ausführung der Erfindung ist vorgesehen, daß an den Wurfschaufeln Sensorelemente angeordnet sind, mittels welcher die von den Düngerkörnern ausgehenden Kräfte ermittelbar sind. Anhand dieser von den Sensorelementen ermittelten Daten kann der Schleuderdüngerstreuer entsprechend eingestellt werden.

Hierbei ist es möglich, daß aus den ermittelten Daten der Sensoren der Abwurfsektor und/oder die Abwurfrichtung der Düngerkörner ermittelbar ist.

Des weiteren kann vorgesehen sein, daß mittels an den Ausbringorganen angeordneten Sensoreinrichtungen die Ausbringmenge ermittelbar ist.

Im folgenden wird die Erfindung anhand der Zeichnungen näher erläutert.
- Fig 1: die Darstellung eines Beispiels zur Erleichterung des Verständnisses des erfindungsgemäßen Verfahren in einem schematischen Schaubild,
- Fig. 2: eine schematische Darstellung eines ersten erfindungsgemäßen Verfahrens,
- Fig. 3: eine schematische Darstellung eines zweiten erfindungsgemäßen Verfahrens,
- Fig. 4: eine schematische Anordnung der Sensoren als Beispiel zur Erleichterung des Verständ nisses für das erfindungsgemäße Verfahren.

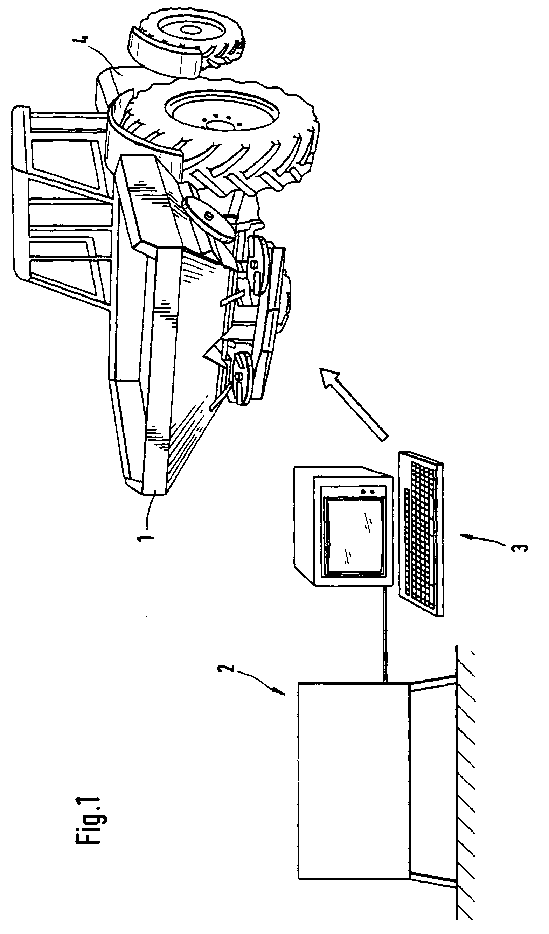

Die Fig. 1 zeigt in einem Schaubild die Ermittlung von Einstelldaten für einen Schleuderdüngerstreuer 1 mit Hilfe eines Minilabors 2 oder Kleingerätes. Mit Hilfe der dort gefundenen Daten wird mit Hilfe eines Computerprogrammes auf die Einstelldaten des Düngerstreuers 1 geschlossen. Dieses Minilabor 2 befindet sich im Bereich des Einsatzortes des Düngerstreuers 1. Es ist jedoch auch möglich, dieses Kleingerät 2 derart auszubilden, daß es am Düngerstreuer 1 angeordnet werden kann. Mittels dieses Minilabors 2 oder Kleingerätes wird eine Analyse des Düngers hinsichtlich seiner Streueigenschaften durchgeführt. Hierbei werden die düngerspezifischen Werte ermittelt. Mittels dieser düngerspezifischen Werte wird auf die Einstelldaten des Düngerstreuers 1 geschlossen. Die Einstelldaten werden mit Hilfe eines Computerprogrammes, welches in dem Computer 3 enthalten ist, berechnet und ermittelt. Hierbei kann der Computer 3 als Prozessrechner ausgebildet sein. Dieser Prozessrechner kann derart klein sein, daß er auf dem Schlepper 4 angeordnet werden kann. Mittels dieses Prozessrechners können die Einstelldaten durch Vergleichen von Vergleichswerten mit den ermittelten düngerspezifischen Werten ermittelt werden.

Es ist auch möglich, daß anstelle eines Computerprogrammes oder Prozessrechners die Einstelldaten für den Düngerstreuer 1 mit Hilfe von Tabellen und Diagrammen ermittelt werden.

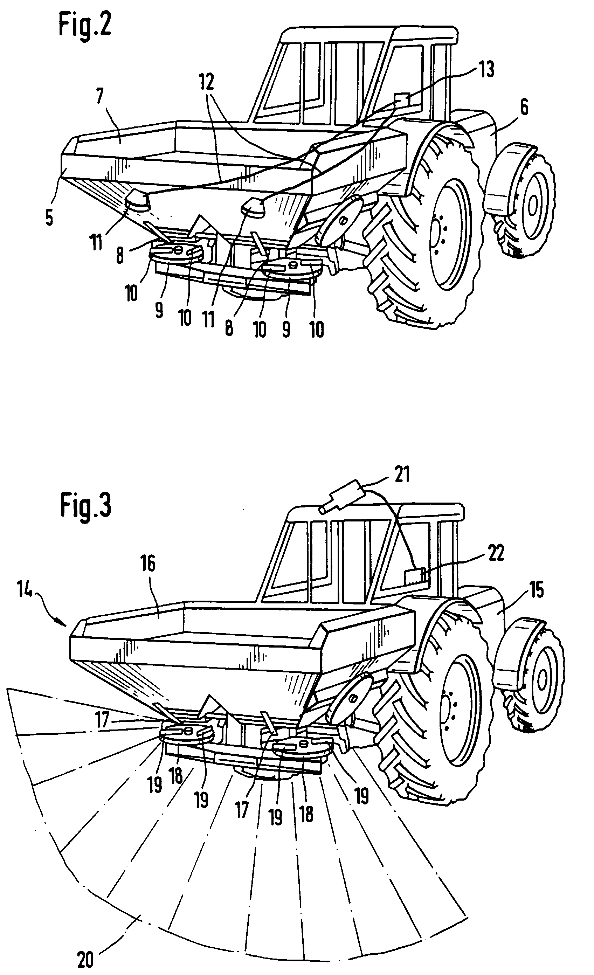

Der Schleuderdüngerstreuer 5 gemäß Fig. 2 ist an den Dreipunktkraftheber eines Ackerschleppers 6 angeordnet. Der Schleuderdüngerstreuer 6 weist den Vorratsbehälter 7 auf, in dessen unterem Bereich die Dosierorgane 8 angeordnet sind. Unterhalb der Dosierorgane 8 sind die Schleuderscheiben 9 mit den einstellbaren Wurfelementen 10 angeordnet. Die Schleuderscheiben 9 werden rotierend angetrieben und der Dünger wird von den Wurfschaufeln 10 in Streufächern abgeschleudert und auf der Bodenoberfläche verteilt. Hinter dem Schleuderdüngerstreuer 5 sind an dem Vorratsbehälter 7 die Sensoren 11 angeordnet, welche den Düngerstrom nach Bewegungsrichtung und Geschwindigkeit der Düngerkörner abtasten und erfassen. Weiterhin kann über die Sensoren 11 die Düngermenge in dem jeweiligen Sektorbereich abgetastet und erfaßt werden. Über die Datenübertragungselemente, die als Kabel 12 ausgebildet sind, werden die von den Sensoren 11 ermittelten Daten an einem auf dem Schlepper 6 angeordneten Rechner 13 weitergeleitet. Der Rechner 13 ermittelt die Düngerverteilung nach Arbeitsbreite und Verteilgenauigkeit. Die Düngerverteilung und Verteilgenauigkeit kann auf geeigneten Anzeigengeräten des Rechnerelementes 13 angezeigt werden. Anhand dieser angezeigten Werte ist der Düngerstreuer 5 einstellbar. Es ist auch möglich, daß der Rechner 13 mit geeigneten Einstellvorrichtungen verbunden ist, über die die Dosierorgane 8, die Schaufelstellung etc. einzustellen sind.

Die Fig. 3 zeigt einen Schleuderdüngerstreuer 14, der an dem Dreipunktkraftheber eines Ackerschleppers 15 angeordnet ist. Der Düngerstreuer 14 weist den Vorratsbehälter 16 zur Aufnahme von Düngemitteln auf. Im unteren Bereich des Vorratsbehälters 16 sind Dosierorgane 1 angeordnet, welche den Dungern unterhalb der Dosierorgane 17 angeordneten Schleuderscheiben 18 zuführen. Die Schleuderscheiben 18 werden rotierend angetrieben. Auf den Schleuderscheiben 18 sind die Wurfschaufeln 19 angeordnet, welche den Dünger über den angedeuteten Bereich 20 abschleudern. Auf dem Schleuderdüngerstreuer 1 bzw. dem Schlepper 15 ist eine als Videokamera 21 ausgebildete Sensoreinrichtung angeordnet, die die sich in dem Streufächer oder den Streufächern 20 befindlichen Düngerkörner abtasten und aufnehmen. Mittels der Kamera 21 wird die Düngerverteilung in einem dreidimensionalen Bild aufgenommen. Mittels des mit der Videokamera 21 verbundenen und auf dem Schlepper angeordneten Rechner 22 läßt sich aus dem dreidimensionalen Bild die Querverteilung des Düngers und die Verteilgenauigkeit ermitteln. Hierzu wird elektronisch das dreidimensionale Bild zu einem zweidimensionalen Bild zusammengeschoben, so daß auch die Querverteilung bildlich dargestellt werden kann.

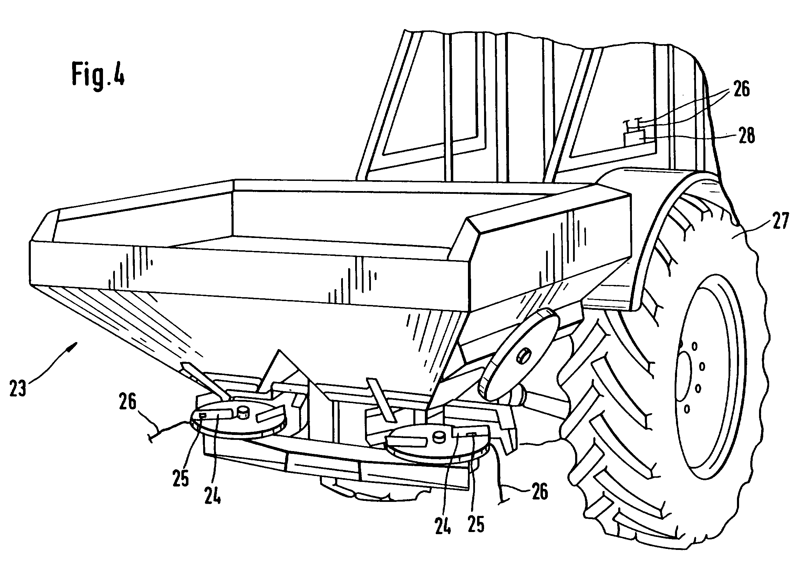

Bei dem Schleuderdüngerstreuer 23 gemäß Fig. 4 sind an den Wurfschaufeln 24 Sensorelemente 25 angeordnet, mittels welcher die von den Düngerkörnern ausgehenden Kräfte ermittelbar sind. Aus diesen ermittelten Daten kann der Abwurfsektor und die Abwurfrichtung der Düngerkörner übermittelt werden. Weiterhin kann hierüber auch die Ausbringmenge ermittelt werden. Die Sensorelemente 25 sind über geeignete Übertragungselemente, beispielsweise Kabel 26 mit einem auf dem Schlepper 27 angeordneten Rechner 28 verbunden.

## Patentansprüche

1. Vorrichtung zur Ermittlung von Einstellwerten für einen Schleuderdüngerstreuer, der den auszubringenden Dünger in einem oder mehreren Streufächern durch Abschleudern von einer oder mehrerer Schleuderscheiben auf der Bodenoberfläche verteilt,
**dadurch gekennzeichnet,** dass
an dem Düngerstreuer (5) Sensoren (11) angeordnet sind, die den Düngerstrom nach Bewegungsrichtung und Geschwindigkeit der Düngerkörper sowie der Düngermenge über jeweils Sektorbereiche abtasten und erfassen und dass ein Rechner (13) vorgesehen ist, der aus den von den Sensoren ermittelten Daten die Düngerquerverteilung nach Arbeitsbreite und Verteilgenauigkeit ermittelt.

2. Vorrichtung nach Anspruch 1,
**dadurch gekennzeichnet,** dass
aufgrund der ermittelten Düngerverteilung und Verteilgenauigkeit nach vorgegebenen Grenzwerten der Düngerstreuer einstellbar ist und/oder direkt mittels geeigneter Einstellvorrichtungen eingestellt wird.

3. Vorrichtung nach Anspruch 1 oder 2,
**dadurch gekennzeichnet,** dass
mittels einer Sensoreinrichtung (21), beispielsweise Video- oder andere Kameras, die sich in dem Streufächer oder den Streufächern befindlichen Düngerkörner abgetastet oder aufgenommen werden.

4. Vorrichtung nach Anspruch 3,
**dadurch gekennzeichnet,** dass
mittels einer Kamera (21) die Düngererteilung in einem dreidimensionalen Bild aufgenommen wird, aus dem die Querverteilung des Düngers und/oder die Verteilgenauigkeit mittels eines Rechners (22) ermittelt wird.

5. Vorrichtung nach einem der Ansprüche 1 bis 4,
**dadurch gekennzeichnet,** dass
dass an den Wurfschaufeln (24) Sensorelemente (25) angeordnet sind, mittels welcher die von den Düngerkörnern ausgehenden Kräfte ermittelbar sind.

6. Vorrichtung nach einem oder mehreren der vorstehenden Ansprüche,
**dadurch gekennzeichnet,** dass
aus den ermittelten Daten der Abwurfsektor und/oder die Abwurfrichtung der Düngerkörner ermittelbar ist.

7. Vorrichtung nach einem oder mehreren der vorstehenden Ansprüche,
**dadurch gekennzeichnet,** dass
mittels an den Ausbringorganen (24) angeordneten Sensoreinrichtungen (25) die Ausbringmenge ermittelbar ist.

8. Verfahren zur Ermittlung von Einstellwerten für einen Schleuderdüngerstreuer, der den auszubringenden Dünger in einem oder mehreren Streufächern durch Abschleudern von einer oder mehreren Schleuderscheiben auf der Bodenoberfläche verteilt,
**dadurch gekennzeichnet,** dass
der Düngerstrom nach Bewegungsrichtung und Geschwindigkeit der Düngerkörner sowie der Düngermenge über jeweils Sektorbereiche von Sensoren (11) abgetastet und erfasst wird und dass aus den von den Sensoren ermittelten Daten in Verbindung mit einem Rechner (13) die Düngerquerverteilung nach Arbeitsbreite und Verteilgenauigkeit ermittelt wird.

9. Verfahren nach Anspruch 8,
**dadurch gekennzeichnet,** dass
aufgrund der ermittelten Düngerverteilung und Verteilgenauigkeit nach vorgegebenen Grenzwerten der Düngerstreuer einstellbar ist und/oder direkt mittels geeigneter Einstellvorrichtungen eingestellt wird.

10. Verfahren nach Anspruch 8 oder 9,
**dadurch gekennzeichnet,** dass
mittels einer Sensoreinrichtung (21), beispielsweise Video- oder andere Kameras, die sich in dem Streufächer oder den Streufächern befindlichen Düngerkörner abgetastet oder aufgenommen werden.

11. Verfahren nach Anspruch 10,
**dadurch gekennzeichnet,** dass
mittels einer Kamera (21) die Düngererteilung in einem dreidimensionalen Bild aufgenommen wird, aus dem die Querverteilung des Düngers und/oder die Verteilgenauigkeit mittels eines Rechners (22) ermittelt wird.

12. Verfahren nach einem der Ansprüch 8 bis 11,
**dadurch gekennzeichnet,** dass
dass an den Wurfschaufeln (24) Sensorelemente (25) angeordnet sind, mittels welcher die von den Düngerkörnern ausgehenden Kräfte ermittelbar sind.

13. Verfahren nach einem der Ansprüche 8 bis 12,
**dadurch gekennzeichnet,** dass
aus den ermittelten Daten der Abwurfsektor und/oder die Abwurfrichtung der Düngerkörner ermittelbar ist.

14. Verfahren nach einem der Ansprüche 8 bis 13,
**dadurch gekennzeichnet,** dass
mittels an den Ausbringorganen (24) angeordneten Sensoreinrichtungen (25) die Ausbringmenge ermittelbar ist.

## Claims

1. Apparatus for determining setting values for a centrifugal fertiliser broadcaster, which distributes the fertiliser to be spread in one or more spread fans by centrifuging by one or more centrifugal discs on the ground surface, characterised in that sensors (11) are disposed on the fertiliser broadcaster (5), which sensors scan and pick-up the fertiliser flow according to the direction of movement and speed of the fertiliser bodies as well as the quantity of fertiliser over respective sector regions, and in that a computer (13) is provided, which determines the transverse fertiliser distribution from the data determined by the sensors, according to working width and distribution accuracy.

2. Apparatus according to claim 1, characterised in that, because of the determined fertiliser distribution and distribution accuracy, the fertiliser broadcaster can be set according to prescribed limit values and/or is set directly by means of suitable setting devices.

3. Apparatus according to claim 1 or 2, characterised in that the fertiliser granules situated in the spread fan or fans are scanned or recorded by means of a sensor arrangement (21), for example video or other cameras.

4. Apparatus according to claim 3, characterised in that the fertiliser distribution is recorded by means of a camera (21) in a three-dimensional image, from which the transverse distribution of the fertiliser and/or the distribution accuracy are/is determined by means of a computer (22).

5. Apparatus according to one of claims 1 to 4, characterised in that sensor elements (25), by means of which the forces arising from the fertiliser granules are determinable, are disposed on the throwing vanes (24).

6. Apparatus according to one or more of the preceding claims, characterised in that the discharge sector and/or the discharge direction of the fertiliser granules are/is determinable from the determined data.

7. Apparatus according to one or more of the preceding claims, characterised in that the distribution quantity is determinable by means of sensor arrangements (25) disposed on the distributing members (24).

8. Method of determining setting values for a centrifugal fertiliser broadcaster, which distributes the fertiliser to be spread in one or more spread fans by centrifuging by one or more centrifugal discs on the ground surface, characterised in that the fertiliser flow is scanned and picked-up by sensors (11) according to the direction of movement and speed of the fertiliser granules as well as the quantity of fertiliser over respective sector regions, and in that the transverse fertiliser distribution is determined from the data determined by the sensors, in conjunction with a computer (13), according to working width and distribution accuracy.

9. Method according to claim 8, characterised in that, because of the determined fertiliser distribution and distribution accuracy, the fertiliser broadcaster can be set according to prescribed limit values and/or is set directly by means of suitable setting devices.

10. Method according to claim 8 or 9, characterised in that the fertiliser granules situated in the spread fan or fans are scanned or recorded by means of a sensor arrangement (21), for example video or other cameras.

11. Method according to claim 10, characterised in that the fertiliser distribution is recorded by means of a camera (21) in a three-dimensional image, from which the transverse distribution of the fertiliser and/or the distribution accuracy are/is determined by means of a computer (22).

12. Method according to one of claims 8 to 11, characterised in that sensor elements (25), by means of which the forces arising from the fertiliser granules are determinable, are disposed on the throwing vanes (24).

13. Method according to one of claims 8 to 12, characterised in that the discharge sector and/or the discharge direction of the fertiliser granules are/is determinable from the determined data.

14. Method according to one of claims 8 to 13, characterised in that the distribution quantity is determinable by means of sensor arrangements (25) disposed on the distributing members (24).

## Revendications

1. Dispositif pour déterminer les données ou grandeurs de réglage d'un épandeur centrifuge d'engrais distribuant l'engrais selon un ou plusieurs éventails d'épandage par éjection à l'aide d'un ou plusieurs disques centrifuges, pour répartir l'engrais à la surface du sol,
caractérisé en ce que
l'épandeur centrifuge d'engrais (5) comporte des capteurs (11) qui détectent le flux d'engrais selon la direction de déplacement et la vitesse des grains d'engrais ainsi que la quantité d'engrais dans des secteurs et en ce qu'il est prévu un calculateur (13) recevant les données déterminées par les capteurs pour déterminer la répartition transversale de l'engrais en fonction de la largeur de travail et de la précision de répartition.

2. Dispositif selon la revendication 1,
caractérisé en ce que
l'épandeur d'engrais se règle à partir de la répartition d'engrais et la précision de répartition obtenues, en fonction de valeurs limites prédéterminées et/ou se règle à l'aide de dispositifs de réglage appropriés.

3. Dispositif selon la revendication 1 ou 2,
caractérisé en ce que
au moyen de l'installation de détection (21) par exemple une caméra vidéo ou autre, on détecte ou on enregistre les grains d'engrais de l'éventail d'épandage ou des éventails d' épandage.

4. Dispositif selon la revendication 3,
caractérisé en ce qu'
à l'aide d'une caméra (21), on prend une image tridimensionnelle de la répartition de l'engrais pour en déterminer la répartition transversale et/ou la précision de répartition à l'aide d'un calculateur (22).

5. Dispositif selon l'une des revendications 1 à 4,
caractérisé en ce que
les éléments de capteur (25) sont montés sur les palettes d'éjection (24) pour déterminer des forces engendrées par les grains d'engrais.

6. Dispositif selon l'une quelconque des revendications précédentes,
caractérisé en ce qu'
on détermine le secteur d'éjection et/ou la direction d'éjection des grains d'engrais à partir des données déterminées du secteur d'éjection.

7. Dispositif selon l'une quelconque des revendications précédentes,
caractérisé en ce qu'
on détermine la quantité à distribuer à l'aide d'installations de détecteur (25) équipant les organes d'éjection (24).

8. Procédé pour déterminer les grandeurs de réglage d'un épandeur centrifuge d'engrais qui répartit l'engrais à distribuer selon un ou plusieurs éventails d'épandage par éjection à l'aide d'un ou plusieurs disques d'épandage pour répartir l'engrais sur le sol,
caractérisé en ce qu'
on détecte le flux d'engrais suivant la direction de déplacement et la vitesse des grains d'engrais ainsi que la quantité d'engrais par chaque fois des plages de secteurs de capteurs (11) et à partir des données obtenues par les capteurs, en liaison avec un calculateur (13), on détermine la répartition transversale de l'engrais selon la largeur de travail et la précision de répartition.

9. Procédé selon la revendication 8,
caractérisé en ce que
l'épandeur d'engrais est réglable en fonction de la répartition d'engrais et de la précision de répartition, obtenues, selon des valeurs limites prédéterminées et/ou directement à l'aide de dispositifs de réglage appropriés.

10. Procédé selon la revendication 8 ou 9,
caractérisé en ce qu'
à l'aide d'une installation de détection (21) par exemple d'une caméra vidéo ou autre caméra, on détecte ou on enregistre les grains d'engrais du ou des éventails d'épandage et on enregistre.

11. Procédé selon la revendication 10,
caractérisé en ce qu'
on prend une image tridimensionnelle de la répartition d'engrais à l'aide d'une caméra (21) et à partir de là on détermine la répartition transversale de l'engrais et/ou la précision de répartition à l'aide d'un calculateur (22).

12. Procédé selon l'une des revendications 8 à 11,
caractérisé en ce que
les palettes d'éjection (24) comportent des éléments de capteur (25) à l'aide desquels on détermine les forces engendrées par les grains d'engrais.

13. Procédé selon l'une des revendications 8 à 12,
caractérisé en ce qu'
à partir des données obtenues, on détermine le secteur d'éjection et/ou la direction d'éjection des grains d'engrais.

14. Procédé selon l'une quelconque des revendications 8 à 13,
caractérisé en ce qu'
on détermine la quantité à distribuer à l'aide d'installations de détection (25) équipant les organes d'éjection (24).
